# EUROPÄISCHE PATENTSCHRIFT

(11) **EP 1 086 540 B1**
(45) Veröffentlichungstag und Bekanntmachung des Hinweises auf die Patenterteilung: **14.08.2002**
(21) Anmeldenummer: 98925381.0
(22) Anmeldetag: 23.06.1998
(51) Int. Cl.: H04H 1/00, H04H 9/00, H04N 7/173

(54) **Anzeigevorrichtung zur Anzeige von empfangenen Informationen und zum Senden der empfangenen digitalen Daten an externe Mobilgeräte und entsprechendes Bestellverfahren**
Display device for displaying received information and for transmitting received digital data to external mobile apparatuses and corresponding request method
Dispositif permettant d'afficher des informations reçues et d'envoyer des données numériques reçues à des appareils mobiles externes et procédé de commande correspondant

(43) Veröffentlichungstag der Anmeldung: 28.03.2001
(73) Patentinhaber: Swisscom Mobile AG, 3050 Bern (CH)
(72) Erfinder: RITTER, Rudolf, CH-3052 Zollikofen (CH); HEUTSCHI, Walter, CH-3303 Jegensdorf (CH); BOUQUET, Hanspeter, CH-3032 Hinterkappelen (CH)
(74) Vertreter: BOVARD AG - Patentanwälte
(86) Internationale Anmeldenummer: CH9800275
(87) Internationale Veröffentlichungsnummer: WO9967904

(56) Entgegenhaltungen:
- EP-A- 0 713 335
- WO-A-94/13107
- WO-A-94/15417
- DE-A- 4 424 380

## Beschreibung

Die vorliegende Erfindung betrifft eine Anzeigevorrichtung zur Anzeige von Informationen und ein entsprechendes Besteliverfahren. Insbesondere betrifft die vorliegende Erfindung eine Anzeigevorrichtung zum Empfang und zur Anzeige von digitalen Daten sowie ein entsprechendes Bestellverfahren.

Für Werbe- oder Informationszwecke werden heutzutage verschiedenste elektronische oder elektromechanische Anzeigevorrichtungen eingesetzt, welche die anzuzeigenden Informationen typischerweise aus einem Speicher beziehen oder über eine Schnittstelle von einer programmierten Vorrichtung zugeliefert bekommen. In der Regel dienen diese Anzeigevorrichtungen bloss zur unidirektionalen Verbreitung von visuellen Informationen, die von einem Benutzer aber nicht in elektronischer Form und/oder in automatisierter Art weiterverwendet werden können.

Vorrichtungen mit einem Radio- oder Fernsehempfänger zum Empfang von programmbegleitenden digitalen Daten und einer Anzeige zur Darstellung von empfangenen programmbegleitenden digitalen Daten sind bekannt und auf dem Markt erhältlich. Insbesondere sind solche Vorrichtungen erhältlich für digitale Radiosysteme DAB (Digital Audio Broadcasting) oder für andere Radiosysteme wie FM-SWIFT oder FM-DARC, oder für Fernsehempfänger mit Teletext, welche typischerweise alle unidirektional arbeiten. Mit solchen Vorrichtungen können zwar Informationen empfangen und angezeigt werden, ein Benutzer kann aber nicht gezielt Informationen nur zu von ihm gewählten Themen empfangen.

In der europäischen Patentanmeldung EP 259 717 wird ein Verfahren beschrieben, in welchem zu Werbezwecken programmbegleitende Daten mit inhaltsspezifischen Codes versehen und ausgesendet werden. Ein Benutzer kann gezielt Informationen zu einem oder mehreren Sachgebieten empfangen, beispielsweise Immobilienwerbung, indem er einen tragbaren Empfänger mit den entsprechenden Codes programmiert. Neben Radiowellen werden als Übertragungsmedium, insbesondere für kurze Distanzen, auch elektromagnetische Wellen, Infrarotstrahlen, sowie Ultraschall erwähnt.

In der Patentanmeldung JP08234709 wird ein Datenanzeigeverfahren beschrieben, in welchem Werbedaten über einen Satellit auf einen Datenempfänger übertragen werden. Die Werbedaten werden auf einer Festplatte gespeichert und auf einem Monitor angezeigt. Landesweite Werbedaten werden vom Datenempfänger, beispielsweise über ISDN- oder PSTN-Netze, auf Werbedatenserver übertragen, wo sie auf einem Bildschirm angezeigt werden. Das Verfahren zielt vor allem auf die flächendeckende Verbreitung von Werbedaten ab, bietet einem mobilen Benutzer jedoch keine Möglichkeit, die Werbedaten in elektronischer Form und/oder in automatisierter Art weiterzuverwenden.

In der Patentanmeldung WO 94/13107 wird ein Set-Top-Terminal für Kabelfernsehverteilsysteme beschrieben, über welches Set-Top-Terminal ein Fernsehapparat an das Kabelfernsehnetz angeschlossen werden kann. Das Set-Top-Terminal gemäss WO 94/13107 kann von einem Benutzer mittels einer mobilen Fernbedienung über eine Infrarotschnittstelle bedient werden. Neben speziellen Diensten, wie beispielsweise der Generierung von Bild-in-Bild-Signalen für Fernsehapparate, die nicht über solche Dienste verfügen, ermöglicht das Set-Top-Terminal gemäss WO 94/13107 einem Benutzer Programm- und Senderlisten auf dem Fernsehapparat anzuzeigen, Benutzervorzugswerte im Set-Top-Terminal abzuspeichern und mittels auf dem Fernsehapparat angezeigten Menus interaktive Dienste über das Kabelfernsehnetz auszuführen, beispielsweise On-line-Umfragen oder Bestellungen von Flugtickets, wobei Daten aufwärts (upstream) über das Kabelfernsehnetz vom Set-Top-Terminal an ein Operationszentrum übertragen werden.

In der Patentanmeldung EP 713335 wird ein System beschrieben, in welchem Daten in einem Mobilgerät drahtlos ab einem Fernsehbildschirm erfasst werden und mittels des Mobilgeräts basierend auf den erfassten Daten Transaktionen eingeleitet werden, wobei die Daten beispielsweise durch das Mobilgerät beispielsweise über ein Mobilfunknetz an ein Dienstzentrum übertragen werden. Im System gemäss EP 713335 werden die Daten für den Benutzer nicht wahmehmbar, beispielsweise als nicht wahmehmbares visuelles Muster, auf dem Bildschirm dargestellt und durch das Mobilgerät mittels einer optischen Linse und einem Photodetektor erfasst.

In der Patentanmeldung WO 94/15417 wird ein mobiles, in eine Infrarot-Fernbedienung integriertes Datenerfassungsgerät beschrieben, welches für Marketingzwecke die Benutzung eines Fernsehapparats durch einen Benutzer überwacht und erfasst. Mittels eines eingebauten Barcode-Lesers können mit dem Datenerfassungsgerät gemäss WO 94/15417 zudem auch die Barcodes von käuflich erworbenen Produkten erfasst werden.

In der Patentanmeldung DE 4424380 wird ein Verfahren beschrieben, in welchem Programmwünsche betreffend verschlüsselte Fernsehprogramme vom interessierten Benutzer mittels eines Mobilgeräts über ein Mobilfunknetz an eine Verwaltungseinrichtung des betreffenden Programmanbieters übermittelt werden, worauf die Verwaltungseinrichtung entsprechende Entschlüsselungsinformationen an ein dem betreffenden Fernsehapparat zugeordnetes Entschlüsselungsgerät übermittelt, so dass der Benutzer das betreffende Fernsehprogramm unverschlüsselt sehen kann.

Es ist die Aufgabe dieser Erfindung, eine neue Anzeigevorrichtung zur Anzeige von Informationen und ein entsprechendes Bestellverfahren vorzuschlagen.

Gemäss der vorliegenden Erfindung wird dieses Ziel insbesondere durch die Elemente des kennzeichnenden Teils der unabhängigen Ansprüche erreicht Weitere vorteilhafte Ausführungsformen gehen ausserdem aus den abhängigen Ansprüchen und der Beschreibung hervor.

Insbesondere wird dieses Ziel durch die Erfindung dadurch erreicht, dass die Anzeigetafel der Anzeigevorrichtung so dimensioniert ist, dass von einem Datenempfangsmodul empfangene und auf der Anzeigevorrichtung angezeigte Informationen, beispielsweise von einem Radio- oder Fernsehempfänger der Anzeigevorrichtung empfangene programmbegleitende digitale Daten, oder von einem Mobilfunk- oder einem Kommunikationsmodul über ein Mobilfunknetz, respektive ein Festnetz empfangene digitale Daten, oder von einem Lesegerät von einem Datenträger gelesene digitale Daten, von Benutzern noch aus einer Distanz von mehreren Metern, zum Beispiel zwei, drei, oder mehr Meter, gelesen werden können, und dass die Anzeigevorrichtung mindestens eine kontaktlose Schnittstelle umfasst, über welche mindestens gewisse der empfangenen, beispielsweise programmbegleitenden, digitalen Daten auf externe, nicht mit der Anzeigevorrichtung verbundene, tragbare, persönliche Mobilgeräte übertragen werden können. Je nach Ausführungsvariante hat eine solche Anzeigevorrichtung verschiedene Vorteile, beispielsweise können mittels einem Radio- oder Fernsehempfänger zum Empfang von programmbegleitenden digitalen Daten Informationen, zum Beispiel zu Werbezwecken, an Benutzer weitervermittelt werden, ohne dass diese selber mit einem entsprechenden Datenempfangsmodul zum Empfang von solchen programmbegleitenden, digitalen Daten ausgerüstet sein müssen.

Vorzugsweise umfasst die Anzeigevorrichtung Filtermittel um nur diejenigen, beispielsweise programmbegleitenden, digitalen Daten entgegenzunehmen, die an sie adressiert sind. Dies hat den Vorteil, dass zum Beispiel mehrere solcher Anzeigevorrichtungen vom selben Radio- oder Fernsehprogramm spezifisch mit verschiedenen Informationen versorgt werden können. Dies kann folglich selbst dann erreicht werden, wenn zum Beispiel der Radiooder Fernsehempfänger in der Anzeigevorrichtung vereinfacht für bloss einen Kanal implementiert wird.

Je nach Variante umfasst die genannte kontaktlose Schnittstelle der Anzeigevorrichtung mindestens eine Spule und/oder einen Infrarotsender, mittels welchen die empfangenen, beispielsweise programmbegleitenden, digitalen Daten in Form von elektromagnetischen Wellen, respektive Infrarotstrahlen, an tragbare, persönliche Mobilgeräte, zum Beispiel Mobilfunktelefone, übertragen werden können. Dies hat den Vorteil, dass die von der Anzeigevorrichtung empfangenen, beispielsweise programmbegleitenden, digitalen Daten nicht nur visuell an Benutzer weitervermittelt werden können, sondern dass sie auch an deren Mobilgeräte übertragen werden können, wo sie beispielsweise weiterbehandelt werden können.

In entsprechenden Varianten kann die kontaktlose Schnittstelle der Anzeigevorrichtung auch Daten von Mobilgeräten empfangen und zwar über die genannte Spule und/oder einen Infrarotempfänger. Zudem können in einer Variante solche von der Anzeigevorrichtung über die kontaktlose Schnittstelle empfangene Daten beispielsweise über Mobilfunknetze oder Festnetze an eine Dienstzentrale übermittelt werden.

In verschiedenen Varianten sind die Anzeigetafel und das Datenempfangsmodul in ein gemeinsames Gehäuse integriert oder sie sind in verschiedenen Gehäusen integriert und über eine Schnittstelle miteinander verbunden.

In einer weiteren Variante umfasst die Anzeigevorrichtung auch einen Lautsprecher und einen Verstärker, um vom genannten Datenempfangsmodul empfangene Audioprogramme, respektive Audiodaten, akustisch wiederzugeben. Dies hat den Vorteil, dass zusätzlich zu den visuellen Informationen auch akustische Informationen, die beispielsweise in einem Zusammenhang mit den visuell dargestellten Informationen stehen, an Benutzer weitervermittelt werden können.

Im erfindungsgemässen Bestellverfahren wird von einem Benutzer durch Betätigen von bestimmten Bedienungselementen des genannten Mobilgeräts eine Bestellung eingeleitet, in welchem Daten, in Abhängigkeit von gewissen der von der Anzeigevorrichtung empfangenen und über die kontaktlose Schnittstelle an das Mobilgerät übertragenen, beispielsweise programmbegleitenden, digitalen Daten, mittels Kurzmeldungen über ein Mobilfunknetz an ein Dienstleistungszentrum gesendet werden. Die Kurzmeldungen sind beispielsweise SMS Kurzmeldungen, USSD Daten oder ähnliche Datagramme, die beispielsweise über ein GSM- oder ein UMTS-Netz an das Dienstleistungszentrum übertragen werden. Der Vorteil besteht darin, dass die empfangenen, beispielsweise programmbegleitenden, digitalen Daten vom Mobilgerät direkt und in automatisierter Art weiterverwendet werden können, und dass beispielsweise die unidirektionale Übertragung der programmbegleitenden digitalen Daten auf eine bidirektionale Kommunikation erweitert werden kann.

Die im Zusammenhang mit dem Bestellverfahren stehenden empfangenen, beispielsweise programmbegleitenden, digitalen Daten umfassen vorzugsweise eine Identifikation des Dienstleistungszentrums, sowie eine Produkte- oder Dienstleistungsidentifikation. Diese Identifikationen ermöglichen die Abwicklung einer Bestellung, zum Beispiel gemäss dem Verfahren für Mobilfunktelefone zur Bestellung von Produkten oder Informationen, welches in der Patentanmeldung PCT/CH96/00464 (WO 98/28900) beschrieben wurde.

In einer Variante kann der Benutzer mittels Bedienungselementen des Mobilgeräts Auswahlbefehle eingeben und über die kontaktlose Schnittstelle an die Anzeigevorrichtung übertragen, wo dadurch die, beispielsweise programmbegleitenden, digitalen Daten selektiert werden, die von der Anzeigevorrichtung an das Mobilgerät übertragen werden. Der Vorteil besteht darin, dass der Benutzer die Daten, die er übertragen haben möchte, direkt bestimmen kann.

In verschiedenen Varianten ist die kontaktlose Schnittstelle im Mobilgerät so realisiert, dass ein Infrarotsender und -empfänger ins Gehäuse des Mobilgeräts integriert ist, oder dass eine Spule im Mobilgerät oder in einer mit dem Mobilgerät entfernbar verbundenen Chipkarte, beispielsweise eine SIM-Karte (Subscriber Identity Module), implementiert ist.

In einer Variante werden gewisse der an das Mobilgerät übertragenen, beispielsweise programmbegleitenden, digitalen Daten im Mobilgerät auf Grund von Benutzerprofilen gefiltert, die beispielsweise auf einer Chipkarte gespeichert sind. Dies hat den Vorteil, dass Daten, für die sich der Benutzer interessiert, automatisch an dessen Mobilgerät übertragen und dort, beispielsweise zur Weiterbehandlung, entgegengenommen werden können.

In einer Variante können die an das genannte Mobilgerät übertragenen und vom Mobilgerät entgegengenommenen, beispielsweise programmbegleitenden, digitalen Daten auf einer Anzeigeeinheit des Mobilgeräts angezeigt und vom Benutzer mittels Bedienungselemente des Mobilgeräts durchblättert, selektiert und beispielsweise in der Chipkarte durch vordefinierte Softwarefunktionen weiterbehandelt werden.

Nachfolgend wird eine Ausführung der vorliegenden Erfindung anhand eines Beispieles beschrieben. Das Beispiel der Ausführung wird durch die einzige beigelegte Figur illustriert, die
ein schematisches Blockdiagramm zeigt, welches einen Datensender, eine Anzeigevorrichtung, ein Mobilfunktelefon mit Chipkarte, sowie ein Mobilfunknetz und ein damit verbundenes Dienstleistungszentrum umfasst.

Das nachfolgende Beispiel bezieht sich auf einen Radiosender 2 als Datensender 2 und entsprechend auf einen Radioempfänger 13, 13' zum Empfang von programmbegleitenden Daten aus Radioprogrammen, die von diesem Radiosender 2 ausgesendet werden. Es soll aber gleich einführend festgehalten werden, dass die Erfindung sich auch auf andere Kombinationen anwenden lässt:
- Aussenden von Fernsehprogrammen mit programmbegleitenden Daten, beispielsweise Teletext Informationen, durch einen Fernsehsender 2, welche von einem entsprechenden Fernsehempfänger 13, 13' empfangen und beispielsweise auf einem Fernsehbildschirm 12, zum Beispiel eine konventionelle elektronische Bildröhre oder ein LCD- oder Plasma-Display, angezeigt werden können.
- Aussenden von Kurzmeldungen, beispielsweise SMS Kurzmeldungen oder USSD Daten, oder von Broadcast-Meldungen über ein Mobilfunknetz 5, beispielsweise ein GSM- oder UMTS-Netz durch einen entsprechenden Sender 51, beispielsweise ein Kommunikations-Server einer Dienstzentrale 51, und Empfangen dieser Daten durch ein entsprechendes Mobilfunkmodul 13.
- Übermitteln von digitalen Daten von einem Sender 51, beispielsweise ein Kommunikations-Server einer Dienstzentrale 51, über ein Festnetz 5, beispielsweise das öffentliche vermittelte Telefonnetz (PSTN) oder das Internet, an ein entsprechendes Kommunikationsmodul 13.
- Lesen von digitalen Daten durch ein Lesegerät 13, 13' von einem nicht dargestellten Datenträger, beispielsweise eine Chipkarte, eine CD-ROM oder eine Diskette.

Im detaillierten Ausführungsbeispiel bezieht sich das Bezugszeichen 2 auf den oben erwähnten Radiosender, beispielsweise ein Sender einer landesweiten oder lokalen Radiostation oder ein Sender zur Abdeckung eines eng beschränkten geografischen Gebiets, zum Beispiel ein Messe- oder Ausstellungsgelände. Der Radiosender ist zum Beispiel ein FM-Sender, welcher insbesondere auch programmbegleitende digitale Daten senden kann. Die Übertragung von programmbegleitenden Daten zusätzlich zum Radioprogramm wird vor allem im digitalen Radiosystem DAB (Digital Audio Broadcasting) oder in anderen Radiosystemen wie FM-SWIFT oder FM-DARC verwendet. Die DAB-Technologie, zum Beispiel, ermöglicht es, sowohl Radioprogramme als auch programmbegleitende Dienste (Program Associated Data, PAD) zu übertragen. Beispielsweise können mittels DAB Daten in acht adressierbaren Kanälen mit einer Kapazität von jeweils 150 Kbits übertragen werden, wobei die Adressierung dieser Kanäle es ermöglicht, Daten an einen separat adressierten Empfänger, an eine definierte Gruppe von mehreren Empfängern (Multicast), oder an alle Empfänger zu senden (Broadcast).

Wie mit den beiden vom Radiosender 2 ausgehenden unidirektionalen Pfeilen angedeutet, werden die programmbegleitenden digitalen Daten, beispielsweise Werbeinformationen über Produkte und/oder Dienstleistungen, zusammen mit eventuellen Audioprogrammen vom Sender verbreitet und von einem entsprechenden Radioempfänger 13, 13' empfangen, der diese programmbegleitenden digitalen Daten empfangen und mit geeigneten Funktionen decodieren kann, das heisst der Radioempfänger 13, 13' ist beispielsweise ein DAB-Radioempfänger 13, 13' oder ein Radioempfänger 13, 13' zum Empfang von programmbegleitenden Daten gemäss FM-SWIFT, FM-DARC oder gemäss einem anderen Verfahren. Der Radioempfänger 13, 13' verfügt je nach Ausführung auch über die Möglichkeit, die oben erwähnten Adressen der verschiedenen Datenkanäle zu erkennen und, diesen Adressen entsprechend, die darin enthaltenen Daten entgegenzunehmen oder zu ignorieren.

Ein solcher Radioempfänger 13, 13' ist Bestandteil der erfindungsgemässen Anzeigevorrichtung 1. Je nach Ausführungsvariante ist der Radioempfänger 13 ins gleiche Gehäuse 11 integriert wie die Anzeigetafel 12, oder der Radioempfänger 13' und die Anzeigetafel 12 sind in separate Gehäuse integriert und über eine durch die gestrichelte Linie 14 schematisch angedeutete Schnittstelle 14 verbunden. Gegebenenfalls kann die Schnittstelle 14 durch dem Fachmann bekannte Mittel ausgeführt werden, zum Beispiel als serielle oder parallele Schnittstelle, mittels einer festen oder entfernbaren Kabelverbindung, oder über eine kontaktlose Schnittstelle.

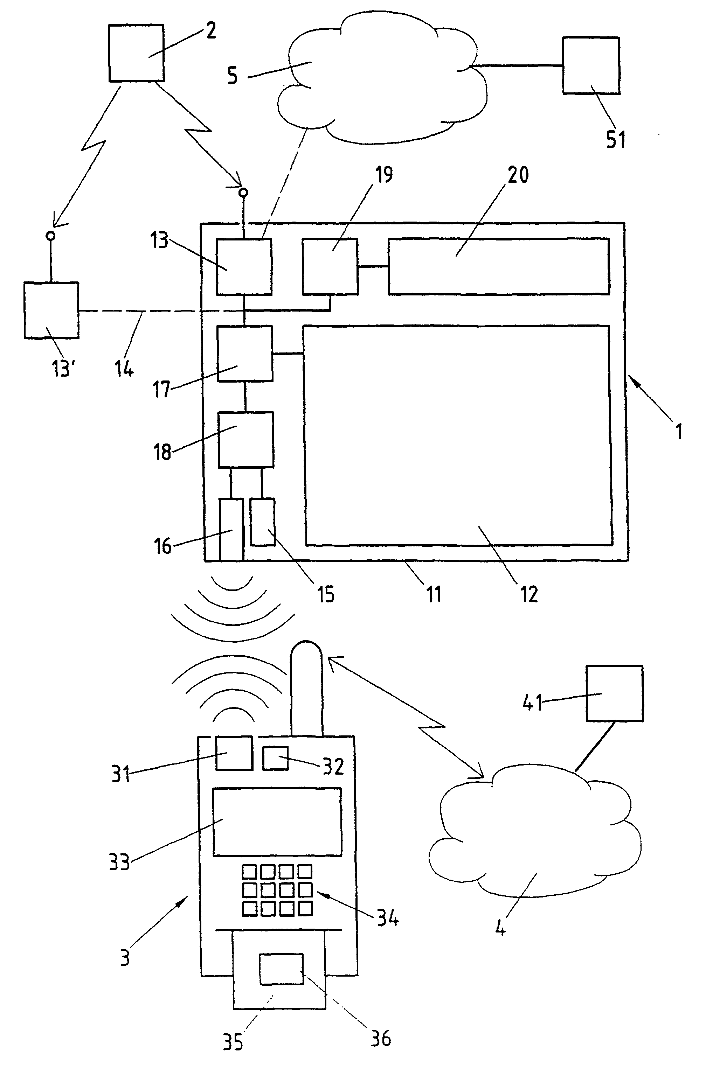

In einer möglichen Ausführung wird ein eventuell gesendetes und empfangenes Audiosignal vom Radioempfänger 13, 13' über eine schematisch angedeutete interne Verbindung an einen Verstärker 19 weitergeleitet, beispielsweise ein dem Fachmann bekannter Niederfrequenzverstärker, von diesem verstärkt und das verstärkte elektrische Signal an einen, oder mehrere Lautsprecher 20 angelegt. Wie in der Figur dargestellt ist, können sowohl der Verstärker 19 als auch der Lautsprecher 20 in das Gehäuse 11 integriert werden oder der Verstärker 19 und/oder der Lautsprecher 20 kann/können über eine nicht dargestellte externe feste oder entfernbare Kabelverbindung mit dem Radioempfänger 13, 13' verbunden werden.

Über eine ebenfalls schematisch dargestellte Verbindung leitet der Radioempfänger 13, 13' die empfangenen programmbegleitenden digitalen Daten an ein Verarbeitungsmodul 17 weiter. Falls die Funktion der Dekodierung der oben erwähnten Kanaladressen nicht vom Radioempfänger 13, 13' übernommen wird, ist das Verarbeitungsmodul 17 beispielsweise dafür verantwortlich, die Adressen der verschiedenen Datenkanäle zu erkennen und, diesen Adressen entsprechend, die darin enthaltenen Daten entgegenzunehmen oder zu ignorieren.

Die entgegengenommenen programmbegleitenden digitalen Daten werden vom Verarbeitungsmodul 17 zwischengespeichert und zur Anzeige über die schematisch dargestellte interne Verbindung an die Anzeigetafel 12 geleitet. Die Anzeigetafel 12 kann beispielsweise eine dem Fachmann bekannte elektronische, elektromechanische oder eine andere Anzeigeeinheit sein. Je nach Ausführung kann die Anzeigesteuerung, das heisst die Steuerung wie die Daten auf der Anzeigetafel 12 dargestellt werden sollen, durch eine entsprechend programmierte Softwarefunktion des Verarbeitungsmodules 17 oder durch entsprechende Funktionalität der Anzeigetafel 12 übernommen werden. Beispielsweise können die gleichen Informationen, zum Beispiel eine Werbung für ein oder mehrere Produkt(e) und/oder Dienstleistungen eines bestimmten Anbieters, über längere Zeit statisch auf der Anzeigetafel dargestellt werden oder verschiedene Informationen, beispielsweise Werbungen von verschiedenen Anbietern oder mehrere Produkte und/oder Dienstleistungen vom gleichen Anbieter, können in einem zeilen- oder seitenweisen Scrolling wechselnd dargestellt werden. Das Verarbeitungsmodul 17 umfasst beispielsweise einen Prozessor und Speichermittel, wobei die Speichermittel nicht nur zur Zwischenspeicherung der empfangenen programmbegleitenden Daten sondern auch zur Speicherung von programmierten Verarbeitungs-, Kommunikationsund Steuerfunktionen dienen. Das Verarbeitungsmodul 17 kann von einem Fachmann zum Beispiel mit handelsüblichen Komponenten konzipiert und realisiert werden.

Mindestens gewisse der entgegengenommenen programmbegleitenden digitalen Daten werden vom Verarbeitungsmodul 17 über eine schematisch dargestellte interne Verbindung auch an ein Elektronikmodul 18 weitergeleitet. Dieses Elektronikmodul 18 umfasst einen elektronischen Schaltkreis, der vom Fachmann so konzipiert und realisiert wird, dass er die Daten vom Verarbeitungsmodul 17 über die interne Verbindung entgegennehmen und als entsprechendes analoges oder digitales Signal zur Aussendung über eine kontaktlose Schnittstelle an diese weiterleitet. Die kontaktlose Schnittstelle umfasst zum Beispiel eine Spule 15, mittels welcher die Daten als elektromagnetische Wellen, beispielsweise mit einer bei 13.56 MHz liegenden oder mit einer anderen Frequenz, ausgesendet werden, und/oder einen Infrarotsender 16, von welchem die Daten als Infrarotstrahlen ausgesendet werden. In umgekehrter Richtung kann der vom Fachmann entwickelte Schaltkreis die von einem externen magnetischen Feld, von einem Mobilgerät 3, in die elektrische Spule 15 induzierten Signale entgegennehmen, und/oder die von einem externen Mobilgerät 3 abgestrahlten Infrarotstrahlen über den Infrarotempfänger 16 entgegennehmen, und als Daten über die schematisch dargestellte interne Verbindung ans Verarbeitungsmodul 17 weiterleiten.

Je nach Ausführungsvariante kann das Elektronikmodul 18 beispielsweise nur einen Schaltkreis, für eine Spule oder einen Infrarotsender/-Empfänger, enthalten, oder es kann zwei verschiedene Schaltkreise umfassen, einen für die Spule und einen für den Infrarotsender/-Empfänger, oder es kann einen gemeinsamen kombinierten Schaltkreis enthalten. Die Schaltkreise können zum Beispiel als integrierte Schaltkreise im Elektronikmodul 18 implementiert werden. Bekannte Schaltkreise für induktive kontaktlose Schnittstellen werden, unter anderem, schon in Chipkarten verwendet und sind unter der Bezeichnung CCI (Contactfree Chipcard Interface) bekannt. Die kontaktlose Infrarot-Kommunikation basiert vorzugsweise auf einem bekannten Standard, zum Beispiel auf dem IrDA-Protokoll (Infrared Data Association). Der handelsübliche Infrarotsender/-Empfänger 16 ist entweder direkt in das Gehäuse 11 integriert oder auf die Oberfläche des Gehäuses 11 aufgesetzt. In einer Variante kann der Fachmann auch entscheiden, das Verarbeitungsmodul 17 mit dem Elektronikmodul 18 zu kombinieren.

Wie in der Figur illustriert ist kann die Anzeigevorrichtung 1 über die kontaktlose Schnittstelle mit einem externen, tragbaren und persönlichen Mobilgerät 3 kommunizieren. Das Mobilgerät 3 ist beispielsweise ein Mobilfunktelefon 3, es kann aber auch eine andere persönliche, tragbare Vorrichtung sein, die von einem Fachmann speziell für den Zweck mit der erfindungsgemässen Anzeigevorrichtung 1 zu kommunizieren entworfen und gebaut wird. Das Mobilgerät 3 umfasst eine kontaktlose Schnittstelle, wie sie beispielsweise in der Patentanmeldung PCT/CH97/00237 (WO 98/58509) im Namen der Anmelderin beschrieben wird, die zum Beispiel einen Infrarotsender/-Empfänger 31, der auf oder ins Gehäuse des Mobilgeräts 3 integriert ist oder eine Spule 32, die ins Mobilgerät 3 integriert ist, umfasst, oder das Mobilgerät 3 umfasst eine Chipkarte 35, wie sie in der Patentanmeldung PCT/CH98/00036 (WO 98/58510) im Namen der Anmelderin beschrieben wird, welche mit dem Mobilgerät 3 entfernbar verbunden ist und eine Spule 36 umfasst, oder das Mobilgerät 3 ist entfernbar mit einem nicht dargestellten Erweiterungsmodul verbunden, wie es in der Patentanmeldung PCT/CH98/00211 (WO 99/60713) im Namen der Anmelderin beschrieben wird, welches eine Spule und/oder einen Infrarotsender/-Empfänger umfasst.

Die maximale Kommunikationsdistanz zwischen der Anzeigevorrichtung 1 und dem externen Mobilgerät 3, bei einer direkten Kommunikation über die kontaktlose Schnittstelle ohne beispielsweise die Funktelefonkomponenten des Mobilfunktelefons 3 zu benutzen, hängt beispielsweise von den Eigenschaften der Spulen 15, 32, 36, welche zum Beispiel durch Wickeln eines Drahtes oder durch eine beliebige andere geeignete Technik hergestellt werden können, sowie von der Sendeleistung ab, welche typischerweise auf der Seite des Mobilgeräts 3 so begrenzt ist, dass dessen Energiereserven nicht zu stark belastet werden. Eine Reichweite von mehreren Metern ist beispielsweise ohne Probleme mittels konventionellen Techniken realisierbar. Es ist wichtig darauf zu achten, dass das Gehäuse 11 an der Stelle, wo sich die Spule 15 befindet nicht elektromagnetisch abgeschirmt ist, damit eine Funkverbindung mit dem externen Mobilgerät 3 aufgebaut werden kann. Auch bei der zusätzlichen oder alternativen Ausführungsvariante mit einem Infrarotsender/-Empfänger 16 hängt die maximale Kommunikationsdistanz von der Sendeleistung ab, welche wiederum auf der Seite des Mobilgeräts 3 so begrenzt ist, dass dessen Energiereserven nicht zu stark belastet werden. Die Reichweite kann bei einer Ausführung mit bekannten Techniken und Komponenten problemlos einige Meter betragen. Allerdings muss bei der Infrarot-Kommunikation die Kommunikationsstrecke zwischen den Infrarotsendern/-Empfängern der Anzeigevorrichtung 1 und dem Mobilgerät 3 frei von Hindernissen sein, die von den Infrarotstrahlen nicht passiert werden können. Es sollte hier auch erwähnt werden, dass die Kommunikationsdistanz bei einer direkten Kommunikation über die kontaktlose Schnittstelle durchaus auch von der Kommunikationsrichtung abhängig sein kann, so dass die Anzeigevorrichtung 1 Signale mit einer grösseren Leistung abstrahlt als das Mobilgerät 3 und folglich auszusendende Daten über eine grössere Distanz an externe Mobilgeräte 3 übermitteln kann als dies umgekehrt der Fall ist. Je nach Anwendung und Kommunikationsprotokoll kann dies durchaus sinnvoll sein.

In einer Variante ist das Verarbeitungsmodul 17 so programmiert, dass es die zwischengespeicherten programmbegleitenden digitalen Daten periodisch, wie oben beschrieben, über die kontaktlose Schnittstelle aussendet, beispielsweise, wie vorher erwähnt, mit einer Sendeleistung, die grösser ist als die der Mobilgeräte 3. Die so ausgesendeten Daten werden von Mobilgeräten 3 im Sendebereich der Anzeigevorrichtung 1 empfangen. In einer Variante werden sie auf Grund von Benutzerprofilen, die beispielsweise auf der mit dem Mobilgerät 3 entfernbar verbundenen Chipkarte 35 abgespeichert sind, gefiltert, indem inhaltsspezifische Codes der vom Mobilgerät 3 empfangenen programmbegleitenden Daten mit entsprechenden Codes in den Benutzerprofilen verglichen werden, beispielsweise durch entsprechend programmierte Softwarefunktionen auf der Chipkarte 35, beispielsweise eine SIM-Karte (Subscriber Identity Module). Auf diese Weise werden nur diejenigen Daten vom Mobilgerät 3 entgegengenommen für die sich der Benutzer gemäss seinen Benutzerprofilen interessiert, beziehungsweise, je nach Anwendung, für die er sich registriert oder für die er bezahlt hat. Beispielsweise kann sich ein Benutzer ein Benutzerprofil auf seine Chipkarte 35 laden lassen, welches Codes für eine bestimmte Gruppe von Produkten und/oder Dienstleistungen enthält oder er kann für ein Benutzerprofil bezahlen, welches ihm erlaubt, gewisse zahlungspflichtige Informationen und Daten über sein Mobilgerät 3 entgegenzunehmen.

In einer alternativen oder zusätzlichen Variante ist das Verarbeitungsmodul 17 so programmiert, dass es bestimmte zwischengespeicherte programmbegleitende digitale Daten auf gezielte Anfrage von einem Mobilgerät 3 aussendet, wobei, je nach Anwendung, die so ausgesendeten Daten jeweils von allen Mobilgeräten 3 im Sendebereich der Anzeigevorrichtung 1 empfangen werden können und dürfen oder wobei die so ausgesendeten Daten beispielsweise eine Identifikation enthalten, auf Grund derer das betreffende Mobilgerät 3 erkennt, dass es sich um die Daten handelt, die es angefordert hat. Falls es für die Anwendung nötig ist, können die Daten auch gesichert übertragen werden, beispielsweise mit einem TTP-Verfahren (Trusted Third Party) oder einem PTP-Verfahren (Point-to-Point). Für die Verschlüsselung des Datenaustausches über die kontaktlose Schnittstelle, zwischen der Anzeigevorrichtung 1 und einem externen Mobilgerät 3, kann aber auch ein DEA, DES, TDES, RSA oder ECC-Sicherheitsalgorithmus verwendet werden. Falls es für die Anwendung zusätzlich nötig ist kann zur Identifizierung und Authentifizierung des Benutzers des Mobilgeräts 3 eine auf der Chipkarte 35 gespeicherte IMSI (International Mobile Subscriber Identification) oder eine IDUI (International Debit User Identification) verwendet werden, welche beispielsweise über die kontaktlose Schnittstelle an die Anzeigevorrichtung 1 übertragen werden, wobei für die Authentifizierung das oben erwähnte TTP-Verfahren oder ein ähnliches Verfahren verwendet werden kann.

Die gezielte Anforderung von Daten durch den Benutzer läuft beispielsweise so ab, dass der Benutzer für ihn interessante Informationen, zum Beispiel eine Werbung mit mehreren Optionen, auf der Anzeigetafel 12 der Anzeigevorrichtung 1 angezeigt sieht. Dabei kann es sich zum Beispiel um angepriesene Produkte und/oder Dienstleistungen handeln, welche beispielsweise mit einer Identifikationsnummer versehen sind. Es ist aber auch möglich, dass Instruktionen zur Anforderungen der angezeigten Informationen über den Lautsprecher 20 der Anzeigevorrichtung 1 gegeben werden. Der Benutzer des Mobilgeräts 3 fordert die Informationen an, indem er mittels der Bedienungselemente 34 des Mobilgeräts 3 zum Beispiel die Identifikationsnummer eingibt oder die angegeben Instruktionen befolgt, wodurch entsprechende Auswahlbefehle über die kontaktlose Schnittstelle des Mobilgeräts 3 an die Anzeigevorrichtung 1 gesendet werden. Dabei kann es nötig sein, dass dieser Vorgang beispielsweise durch vordefinierte Tasten des Mobilgeräts 3 initiiert und abgeschlossen wird, die beispielsweise ein für die Datenanforderung verantwortliches Programm auf der Chipkarte 35 des Mobilgeräts 3 aufstarten und beenden. In der Anzeigevorrichtung 1 werden die Auswahlbefehle wie oben beschrieben über die kontaktlose Schnittstelle empfangen und an das Bearbeitungsmodul 17 weitergeleitet, wo sie von programmierten Kommunikationsfunktionen entgegengenommen und behandelt werden. Das heisst, die angeforderten Informationen, beispielsweise die entsprechenden programmbegleitenden digitalen Daten, zum Beispiel Informationen über ein bestimmtes Produkt oder eine Dienstleistung, werden, wie oben beschrieben, von der Anzeigevorrichtung 1 ausgesendet und an das/die Mobilgerät(e) 3 übertragen. Entsprechende Softwareprogramme können vom Fachmann für das Verarbeitungsmodul 17 und für die Chipkarte 35, beispielsweise eine SIM-Karte, entwickelt werden.

Vorteilhafterweise enthalten mindestens gewisse der programmbegleitenden digitalen Daten eine Produkte- oder Dienstleistungsidentifikation sowie beispielsweise eine Identifikation eines Dienstleistungszentrums 41, über welches Bestellungen für diese Produkte und/oder Dienstleistungen abgewickelt werden können. Es ist auch möglich, dass der Radiosender 2 als Dienstleistungszentrum agiert, welches beispielsweise Bestellungen für Informationen entgegennehmen kann, und dass diesbezügliche programmbegleitende digitale Daten den Radiosender 2 als Dienstleistungszentrum identifizieren. Auf Grund solcher programmbegleitenden digitalen Daten (mit Produkteund/oder Dienstleistungsidentifikationen), die vom Mobilgerät 3 wie beschrieben über die kontaktlose Schnittstelle von der Anzeigevorrichtung 1 empfangen werden, kann der Benutzer des Mobilgeräts 3 eine Bestellung für die genannten Produkte oder Dienstleistungen einleiten. Für entsprechende Daten, die mittels Auswahlbefehlen von der Anzeigevorrichtung 1 angefordert und empfangen wurden, kann die Bestellung beispielsweise so eingeleitet werden, dass eine vordefinierte Taste der Bedienungselemente 34 des Mobilgeräts gedrückt wird. Falls entsprechende Daten für mehrere Produkte und/oder Dienstleistungen vom Mobilgerät 3 empfangen wurden, können diese auf der Anzeigeeinheit 33 des Mobilgeräts 3 dargestellt, mittels Benutzung der Bedienungselemente 34 durchblättert und selektiert werden, und für ein selektiertes Produkt oder eine selektierte Dienstleistung kann die Bestellung beispielsweise wiederum mit der oben erwähnten Funktionstaste initiiert werden. Der Fachmann wird verstehen, dass für selektierte Daten anstatt einer Bestellung auch andere vordefinierte Softwarefunktionen auf der Chipkarte aufgestartet und ausgeführt werden können. Nach der Initiierung der Bestellung werden die genannten Produkte- oder Dienstleistungsidentifikationen mittels einer Kurzmeldung, zum Beispiel eine SMS Kurzmeldung, USSD Daten oder ein ähnliches Datagramm, über ein Mobilfunknetz 4, zum Beispiel ein GSM- oder UMTS-Netz, an das identifizierte Dienstleistungszentrum 41 (oder 2) übermittelt. Um einer irrtümlichen Eingabe einer Bestellung vorzubeugen, können natürlich zusätzliche Bestätigungsschritte eingebaut werden, auf die hier nicht näher eingegangen werden soll. Der Empfang der programmbegleitenden digitalen Daten über die kontaktlose Schnittstelle sowie der Ablauf der Bestellungsinitiierung und Bestellungsabwicklung können beispielsweise durch entsprechend programmierte Softwarefunktionen auf der Chipkarte 35 ausgeführt werden, welche vom Fachmann entwickelt werden. Die Übermittlung und Behandlung der Daten in Kurzmeldungen an das und im Dienstleistungszentrum 41 erfolgt beispielsweise gemäss dem SICAP Verfahren, welches unter anderem in EP 689 368 beschriebenen worden ist, gemäss einem ähnlichen Verfahren oder basierend auf WAP (Wireless Application Protocol). Ein Bestellverfahren für Produkte oder Informationen für ein Mobilfunktelefon 3, welches beispielsweise hier angewendet werden kann, wird in der Patentanmeldung im Namen der Anmelderin PCT/CH96/00464 (WO 98/28900)beschrieben.

Wie bereits schon angetönt wurde, eignet sich die erfindungsgemässe Anzeigevorrichtung 1 beispielsweise zum Anzeigen und Weiterleiten von Werbeinformationen über Produkte und/oder Dienstleistungen, welche mittels programmbegleitenden digitalen Daten von einem Radiosender 2 ausgesendet werden können, und das entsprechende Bestellverfahren für die Bestellung dieser Produkte und/oder Dienstleistungen von einem Dienstleistungszentrum 41 (oder 2) mittels einem Mobilgerät 3. Die konkreten Einsatzmöglichkeiten sind nahezu unbegrenzt und umfassen beispielsweise Anzeigevorrichtungen auf Messe- und Ausstellungsgeländen, in Unterhaltungspärken und Einkaufszentren, in Flughäfen und Bahnhöfen, in Finanzzentren und Börsenplätzen, oder in anderen Lokalitäten, die von einem zahlreichen Publikum besucht werden.

Nicht nur die Einsatzmöglichkeiten sondern generell auch die Anwendungsmöglichkeiten der beschriebenen Erfindung sind fast grenzenlos und keinesfalls nur auf die gegebenen Beispiele von Werbung für und Bestellung von Produkten und Dienstleistungen limitiert. Insbesondere für Informationsdienste oder Zutrittsrechte zu örtlich begrenzten Diensten ist es beispielsweise auch möglich, die blosse Bestellung auch auf die Bezahlung und die Auslieferung zu erweitern. Zum Beispiel kann auf der Anzeigevorrichtung 1 Werbung für eine Veranstaltung, beispielsweise eine Sportveranstaltung oder eine touristische Attraktion wie eine Seerundfahrt oder eine Bergbahnfahrt, gemacht werden und der Benutzer kann anhand der über die Anzeigevorrichtung 1 empfangenen programmbegleitenden digitalen Daten eine entsprechende Bestellung, für ein oder mehrere Zutrittstickets, in Kurzmeldungen über ein Mobilfunknetz 4 aufgeben, welches er mittels einem auf der Chipkarte 35 gespeicherten vorausbezahlten Geldbetrag auch gleichzeitig bezahlen lassen kann. Als Gegenleistung wird ihm beispielsweise über das Mobilfunknetz 4 ein Zutrittsschlüssel für eine oder mehrere Personen übermittelt und auf die Chipkarte 35 geladen. Beim Besuch der Veranstaltung wird dann der Zutrittsschlüssel über die kontaktlose Schnittstelle des Mobilgeräts 3 an eine nicht dargestellte externe Vorrichtung, in diesem Falle eine Zutrittskontrolle, übermittelt und ihm entsprechend der Zugang gewährt.

An dieser Stelle sollte auch nochmals erwähnt werden, dass es, dank der Adressierungs- und Filtermöglichkeit von programmbegleitenden digitalen Daten in verschiedenen Kanälen, möglich ist, mit einem Radiosender 2 auf einer Sendefrequenz verschiedene Anzeigevorrichtungen 1 mit verschiedenen Informationen zu versorgen; dadurch können beispielsweise mehrere Anzeigevorrichtungen 1 an verschiedenen Standorten gezielt und individuell mit Informationen versorgt werden.

In einer Variante umfasst die Anzeigevorrichtung 1 auch ein Sendemodul, in der Figur schematisch als Bestandteil des Datenempfangsmodul 13 angedeutet, zur Übermittlung von Daten über ein Festnetz 5, beispielsweise das öffentliche vermittelte Telefonnetz (PSTN) oder das Internet, oder über ein Mobilfunknetz 5, beispielsweise ein GSM- oder UMTS-Netz, an eine Dienstzentrale 51. Über dieses Sendemodul 13 können beispielsweise Daten, die wie oben beschrieben über die kontaktlose Schnittstelle empfangen, an das Bearbeitungsmodul 17 weitergeleitet, und von diesem mittels entsprechenden programmierten Kommunikationsfunktionen entgegengenommen und an das Sendemodul 13 weitergeleitet werden, an eine externe Dienstzentrale 51 zur dortigen Weiterbehandlung und/oder Abspeicherung übermittelt werden.

Wie bereits erwähnt wurde kann das Datenempfangsmodul 13, 13' der erfindungsgemässen Anzeigevorrichtung 1 nicht nur mittels eines Radioempfängers 13, 13' zum Empfang von programmbegleitenden digitalen Daten realisiert werden, sondern das Datenempfangsmodul 13, 13' kann auch ein Fernsehempfänger 13, 13' zum Empfang von programmbegleitenden Daten, ein Mobilfunkmodul 13 zum Empfang und zur Übermittlung von digitalen Daten über ein Mobilfunknetz 5, ein Kommunikationsmodul 13 zum Empfang und zur Übermittlung von digitalen Daten über ein Festnetz 5, oder ein Lesegerät 13, 13' zum Lesen von digitalen Daten von einem Datenträger sein. Obwohl in der Figur nicht alle Kombinationsmöglichkeiten explizit dargestellt sind ist es für den Fachmann verständlich, dass es in bestimmten Anwendungen sinnvoll sein kann einige dieser Varianten zu kombinieren, beispielsweise kann es, wie oben schon erwähnt wurde, sinnvoll sein ein Sendemodul 13 zur Übermittlung von Daten über ein Festnetz 5 oder ein Mobilfunknetz 5 an eine Dienstzentrale 51 mit einem bestimmten Datenempfangsmodul zu kombinieren. Zudem kann der Fachmann auch davon ausgehen, dass die verschiedenen Ausführungsvarianten des Datenempfangsmoduls 13, 13', wie bereits für den Radioempfänger beschrieben wurde, ins gleiche Gehäuse 11 integriert sind wie die Anzeigetafel 12, oder dass diese Datenempfangsmodule und die Anzeigetafel 12 in separate Gehäuse integriert und über eine durch die gestrichelte Linie 14 schematisch angedeutete Schnittstelle 14 verbunden sind.

Es kann überdies bei den verschiedenen Datenempfangsmodulen 13, 13' auch sinnvoll sein eventuelle Audiosignale über die schematisch angedeutete interne Verbindung über den oben beschriebenen Verstärker 19 an einen, oder mehrere, Lautsprecher 20 anzulegen. Der Fachmann wird allerdings wissen, dass je nach Ausführung des Datenempfangsmoduls 13, 13' entweder das Datenempfangsmodul 13, 13' oder das Verarbeitungsmodul 17, oder gegebenenfalls der Verstärker 19, mit entsprechenden Komponenten und/oder programmierten Funktionen versehen werden müssen um beispielsweise digitale Audiodaten in ein analoges Audiosignal zu wandeln, oder um beispielsweise im Fernsehempfänger 13, 13' die programmbegleitenden Daten, das visuelle Signal, und das Audiosignal zu trennen.

Es wird für den Fachmann auch verständlich sein, dass je nach Ausführung des Datenempfangsmoduls 13, 13' das Verarbeitungsmodul 17 und die in der Figur schematisch angedeutete interne Verbindung zwischen dem Datenempfangsmodul 13, 13' und dem Verarbeitungsmodul 17 entsprechend anders konzipiert und realisiert werden müssen.

Neben der Installation und dem Vertrieb von Anzeigevorrichtungen 1 können gegen Bezahlung auch Chipkarten 35, beispielsweise SIM-Karten, mit der nötigen Funktionalität zur Ausführung des erfindungsgemässen Bestellverfahrens sowie mit vom Benutzer gewählten Benutzerprofilen geladen werden. Es ist beispielsweise auch möglich, Anzeigevorrichtungen 1 an Anbieter von Dienstleistungen und/oder Produkten zu vermieten und/oder für jedes auf diesem Weg bestellte Produkt oder Dienstleistung eine Kommission zu verlangen.

## Patentansprüche

1. Anzeigevorrichtung (1) umfassend eine Anzeigetafel (12), auf der Informationen angezeigt werden können, sowie ein Datenempfangsmodul (13, 13') zum Empfang von digitalen, auf der genannten Anzeigetafel (12) anzeigbaren Daten, wobei die genannte Anzeigetafel (12) so dimensioniert ist, dass vom Datenempfangsmodul (13, 13') empfangene und auf der Anzeigetafel (12) angezeigte Informationen von Benutzern noch aus einer Distanz von mehreren Metern gelesen werden können, **dadurch gekennzeichnet,**
**dass** die Anzeigevorrichtung (1) zusätzlich mindestens eine kontaktlose Schnittstelle umfasst, Ober welche mindestens gewisse der empfangenen genannten digitalen Daten auf ein oder mehrere externe, nicht mit der Anzeigevorrichtung (1) verbundene, tragbare, persönliche Mobilgeräte (3) im Sendebereich der Anzeigevorrichtung (1) übertragbar sind, und
**dass** die Anzeigevorrichtung (1) ein Verarbeitungsmodul (17) umfasst, welches Verarbeitungsmodul (17) so eingerichtet ist, dass es mindestens gewisse der empfangenen genannten digitalen Daten periodisch über die kontaktlose Schnittstelle aussendet, und/oder welches Verarbeitungsmodul (17) so eingerichtet ist, dass es durch die Mobilgeräte (3) über die kontaktlose Schnittstelle ausgesendete Auswahlbefehle entgegennimmt und entsprechend den entgegengenommenen Auswahlbefehlen gewisse der empfangenen genannten digitalen Daten über die kontaktlose Schnittstelle aussendet.

2. Anzeigevorrichtung (1) gemäss vorhergehendem Anspruch, **dadurch gekennzeichnet, dass** das genannte Datenempfangsmodul (13, 13') ein Radioempfänger (13, 13') zum Empfang von programmbegleitenden digitalen Daten ist.

3. Anzeigevorrichtung (1) gemäss Anspruch 1, **dadurch gekennzeichnet, dass** das genannte Datenempfangsmodul (13, 13') ein Femsehempfänger (13, 13') zum Empfang von programmbegleitenden digitalen Daten ist.

4. Anzeigevorrichtung (1) gemäss Anspruch 1, **dadurch gekennzeichnet, dass** das genannte Datenempfangsmodul (13,13') ein Mobilfunkmodul (13, 13') zum Empfang und zur Übermittlung von digitalen Daten über ein Mobilfunknetz ist.

5. Anzeigevorrichtung (1) gemäss Anspruch 1, **dadurch gekennzeichnet, dass** das genannte Datenempfangsmodul (13, 13') ein Kommunikationsmodul (13, 13') zum Empfang und zur Übermittlung von digitalen Daten über ein Festnetz ist

6. Anzeigevorrichtung (1) gemäss Anspruch 1, **dadurch gekennzeichnet, dass** das genannte Datenempfangsmodul (13, 13') ein Lesegerät (13, 13') zum Lesen von digitalen Daten von einem Datenträger ist

7. Anzeigevorrichtung (1) gemäss einem der Ansprüche 1 bis 5, **dadurch gekennzeichnet, dass** sie Filtermittel umfasst, um nur diejenigen genannten digitalen Daten entgegenzunehmen, die an sie adressiert sind.

8. Anzeigevorrichtung (1) gemäss einem der vorhergehenden Ansprüche, **dadurch gekennzeichnet, dass** das genannte Mobilgerät (3), an welches die genannten mindestens gewissen empfangenen digitalen Daten übertragen werden können, ein Mobilfunktelefon (3) ist

9. Anzeigevorrichtung (1) gemäss einem der vorhergehenden Ansprüche, **dadurch gekennzeichnet, dass** die genannte kontaktlose Schnittstelle mindestens eine Spule (15) umfasst, mittels welcher die genannten mindestens gewissen empfangenen digitalen Daten in Form von elektromagnetischen Wellen an mindestens gewisse der genannten Mobilgeräte (3) übertragen werden können.

10. Anzeigevorrichtung (1) gemäss vorhergehendem Anspruch, **dadurch gekennzeichnet, dass** mittels der genannten Spule (15) auch Daten vom genannten Mobilgerät (3) empfangen werden können.

11. Anzeigevorrichtung (1) gemäss einem der vorhergehenden Ansprüche, **dadurch gekennzeichnet, dass** die genannte kontaktlose Schnittstelle einen Infrarotsender (16) umfasst, mittels dessen die genannten mindestens gewissen empfangenen digitalen Daten in Form von Infrarotstrahlen an mindestens gewisse der genannten Mobilgeräte (3) übertragen werden können.

12. Anzeigevorrichtung (1) gemäss vorhergehendem Anspruch, **dadurch gekennzeichnet, dass** die genannte kontaktlose Schnittstelle zusätzlich einen Infrarotempfänger (16) umfasst, mittels dessen Daten vom genannten Mobilgerät (3) empfangen werden können.

13. Anzeigevorrichtung (1) gemäss einem der vorhergehenden Ansprüche, **dadurch gekennzeichnet, dass** die genannte Anzeigetafel (12) und das genannte Datenempfangsmodul (13) in ein gemeinsames Gehäuse (11) der Anzeigevorrichtung (1) integriert sind.

14. Anzeigevorrichtung (1) gemäss einem der Ansprüche 1 bis 12, **dadurch gekennzeichnet, dass** die genannte Anzeigetafel (12) und das genannte Datenempfangsmodul (13') in separaten Gehäusen integriert und über eine Schnittstelle (14) miteinander verbunden sind.

15. Anzeigevorrichtung (1) gemäss einem der vorhergehenden Ansprüche, **dadurch gekennzeichnet, dass** sie einen Lautsprecher (20) und Verstärker (19) umfasst, um vom genannten Datenempfangsmodul (13, 13') empfangene Audioprogramme akustisch wiederzugeben.

16. Bestellverfahren, in welchem digitale Daten von einer Anzeigevorrichtung (1) mit einem Datenempfangsmodul (13, 13') empfangen werden, wobei mindestens gewisse der empfangenen genannten digitalen Daten auf einer Anzeigetafel (12) der genannten Anzeigevorrichtung (1) angezeigt werden, welche Anzeigetafel (12) so dimensioniert ist, dass vom Datenempfangsmodul (13, 13') empfangene und auf der Anzeigetafel (12) angezeigte Informationen von Benutzern noch aus einer Distanz von mehreren Metern gelesen werden können, **dadurch gekennzeichnet,**
**dass** mindestens gewisse der empfangenen genannten digitalen Daten von der genannten Anzeigevorrichtung (1) über eine kontaktlose Schnittstelle an ein oder mehrere externe, nicht mit der genannten Anzeigevorrichtung (1) verbundene Mobilgeräte (3) im Sendebereich der Anzeigevorrichtung (1) übertragen werden, wobei durch ein Verarbeitungsmodul (17) der Anzeigevorrichtung (1) mindestens gewisse der empfangenen genannten digitalen Daten periodisch über die kontaktlose Schnittstelle ausgesendet werden, und/oder wobei durch dieses Verarbeitungsmodul (17) Auswahlbefehle von Mobilgeräten (3) entgegengenommen werden, die durch diese Mobilgeräte (3) über die kontaktlose Schnittstelle ausgesendet werden, und durch dieses Verarbeitungsmodul (17) entsprechend den entgegengenommenen Auswahlbefehlen gewisse der empfangenen genannten digitalen Daten über die kontaktlose Schnittstelle ausgesendet werden, und
**dass** ein Benutzer durch Betätigen von bestimmten Bedienungselementen (34) eines der genannten Mobilgeräte (3) eine Bestellung einleitet, um Daten in Abhängigkeit von gewissen der genannten empfangenen digitalen Daten mittels Kurzmeldungen von diesem einen der genannten Mobilgeräte (3) über ein Mobilfunknetz (4) an ein Dienstleistungszentrum (41) zu senden.

17. Bestellverfahren gemäss vorhergehendem Anspruch, **dadurch gekennzeichnet, dass** mindestens gewisse der empfangenen genannten digitalen Daten in der genannten Anzeigevorrichtung (1) auf Grund von Addressierungsinformationen gefiltert werden.

18. Bestellverfahren gemäss einem der Ansprüche 16 bis 17, **dadurch gekennzeichnet, dass** mindestens gewisse der empfangenen genannten digitalen Daten eine Identifikation des genannten Dienstleistungszentrums (41) sowie eine Produkte- oder Dienstleistungsidentifikation umfassen.

19. Bestellverfahren gemäss einem der Ansprüche 16 bis 18, **dadurch gekennzeichnet, dass** die genannte kontaktlose Schnittstelle eine Infrarotschnittstelle ist und die genannten Auswahlbefehle mittels einem ins Gehäuse des genannten Mobilgeräts (3) integrierten Infrarotsender (31) an die genannte Anzeigevorrichtung (1) übertragen werden.

20. Bestellverfähren gemäss einem der Ansprüche 16 bis 18, **dadurch gekennzeichnet, dass** die genannte kontaktlose Schnittstelle eine Induktivschnittstelle ist und die genannten Auswahlbefehle mittels einer ins genannte Mobilgerät (3) integrierten Spule (32) an die genannte Anzeigevorrichtung (1) übertragen werden.

21. Bestellverfahren gemäss einem der Ansprüche 16 bis 18, **dadurch gekennzeichnet, dass** die genannte kontaktlose Schnittstelle eine Induktivschnittstelle ist und die genannten Auswahlbefehle mittels einer Spule (36), die in eine mit dem genannten Mobilgerät (3) entfernbar verbundene Chipkarte (35) integriert ist, an die genannte Anzeigevorrichtung (1) übertragen werden.

22. Bestellverfahren gemäss einem der Ansprüche 16 bis 21, **dadurch gekennzeichnet, dass** mindestens gewisse der vom genannten Mobilgerät (3) über die genannte kontaktlose Schnittstelle an die genannte Anzeigevorrichtung (1) übertragenen Daten von der genannten Anzeigevorrichtung (1) über ein Mobilfunknetz (5) oder ein Festnetz (5) an eine Dienstzentrale (51) übertragen werden können.

23. Bestellverfahren gemäss einem der Ansprüche 16 bis 22, **dadurch gekennzeichnet, dass** mindestens gewisse der an das genannte Mobilgerät (3) übertragenen genannten digitalen Daten im genannten Mobilgerät (3) auf Grund von Benutzerprofilen gefiltert werden.

24. Bestellverfahren gemäss vorhergehendem Anspruch, **dadurch gekennzeichnet, dass** die genannten Benutzerprofile auf einer mit dem genannten Mobilgerät (3) entfernbar verbundenen Chipkarte (35) gespeichert sind.

25. Bestellverfahren gemäss einem der Ansprüche 16 bis 24, **dadurch gekennzeichnet, dass** die an das genannte Mobilgerät (3) übertragenen und vom genannten Mobilgerät (3) entgegengenommenen genannten digitalen Daten auf einer Anzeigeeinheit (33) des genannten Mobilgeräts (3) angezeigt und vom genannten Benutzer mittels der genannten Bedienungselemente (34) durchblättert und selektiert werden können.

26. Bestellverfahren gemäss einem der Ansprüche 16 bis 25, **dadurch gekennzeichnet, dass** die an das genannte Mobilgerät (3) übertragenen und vom genannten Mobilgerät (3) entgegengenommenen genannten digitalen Daten in einer mit dem genannten Mobilgerät (3) entfembar verbundenen Chipkarte (35) durch vordefinierte Softwarefunktionen weiterbehandeit werden können.

27. Bestellverfahren gemäss einem der Ansprüche 16 bis 26, **dadurch gekennzeichnet, dass** das genannte Datenempfangsmodul (13, 13') ein Radioempfänger (13, 13') oder ein Femsehempfänger (13, 13') zum Empfang von programmbegleitenden digitalen Daten, ein Mobilfunkmodul (13, 13') zum Empfang und zur Übermittlung von digitalen Daten über ein Mobilfunknetz, ein Kommunikationsmodul (13, 13') zum Empfang und zur Übermittlung von digitalen Daten über ein Festnetz, oder ein Lesegerät (13, 13') zum Lesen von digitalen Daten von einem Datenträger ist.

## Claims

1. Display device (1) comprising a display panel (12), on which information can be displayed, as well as a data receiving module (13, 13') for receiving digital data, displayable on said display panel (12), said display panel (12) being dimensioned such that information received by the data receiving module (13, 13') and displayed on the display panel (12) can still be read by users from a distance of several meters, **characterised**
**in that** the display device (1) further comprises at least one contactless interface via which at least certain of the said digital data received are transmittable in the transmitting range of the display device (1) to one or more external, portable, personal mobile devices (3), not connected to the display device (1), and
**in that** the display device (1) comprises a processing module (17) which processing module (17) is set up in such a way that it transmits periodically, via the contactless interface, at least certain of the said digital data received, and/or which processing module (17) is set up in such a way that it receives selection commands, transmitted via the contactless interface by the mobile devices (3), and transmits, via the contactless interface, certain of the said digital data received, based on the received selection commands.

2. Display device (1) according to the preceding claim, **characterised in that** said data receiving module (13, 13') is a radio receiver (13, 13') for receiving program-accompanying digital data.

3. Display device (1) according to claim 1, **characterised in that** said data receiving module (13, 13') is a television receiver (13, 13') for receiving program-accompanying digital data.

4. Display device (1) according to claim 1, **characterised in that** said data receiving module (13, 13') is a mobile radio module (13, 13') for receiving and transmitting digital data over a mobile radio network.

5. Display device (1) according to claim 1, **characterised in that** said data. receiving module (13, 13') is a communications module (13, 13') for receiving and transmitting program-accompanying digital data over a fixed network.

6. Display device (1) according to claim 1, **characterised in that** said data receiving module (13, 13') is a reader (13, 13') for reading digital data from a data carrier.

7. Display device (1) according to one of the claims 1 to 5, **characterised in that** it comprises filter means to receive only those said digital data that are addressed to it.

8. Display device (1) according to one of the preceding claims, **characterised in that** said mobile device (3) to which said at least certain digital data received can be transmitted, is a mobile radio telephone (3).

9. Display device (1) according to one of the preceding claims, **characterised in that** said contactless interface comprises at least a coil (15) by means of which said at least certain digital data received can be transmitted in the form of electromagnetic waves to at least certain of said mobile devices (3).

10. Display device (1) according to the preceding claim, **characterised in that** data can also be received from said mobile device (3) by means of said coil (15).

11. Display device (1) according to one of the preceding claims, **characterised in that** said contactless interface comprises an infrared transmitter (16), by means of which said at least certain digital data received can be transmitted in the form of infrared rays to at least certain of said mobile devices (3).

12. Display device (1) according to the preceding claim, **characterised in that** said contactless interface further comprises an infrared receiver (16) by means of which its data can be received from said mobile device (3).

13. Display device (1) according to one of the preceding claims, **characterised in that** said display panel (12) and said data receiving module (13) are integrated into a common housing (11) of the display device (1).

14. Display device (1) according to one of the claims 1 to 12, **characterised in that** said display panel (12) and said data receiving module (13') are integrated into separate housings and are connected to each other via an interface (14).

15. Display device (1) according to one of the preceding claims, **characterised in that** it comprises a loudspeaker (20) and amplifier (19), in order to reproduce acoustically audio programs received from said data receiving module (13, 13').

16. Ordering method, in which digital data are received by a display device (1) with a data receiving module (13, 13'), at least certain of the said digital data received being displayed on a display panel (12) of said display device (1), which display panel (12) is dimensioned such that information received from the data receiving module (13, 13') and displayed on the display panel (12) can still be read by users from a distance of several meters, **characterised**
**in that** at least certain of the said digital data received are transmitted by said display device (1) in the transmitting range of the display device (1) via a contactless interface to one or more external mobile device (3) not connected to said display device, by means of a processing module (17) of the display device (1) at least certain of the said digital data received being transmitted periodically via the contactless interface, and/or by means of this processing module (17) selection commands from mobile devices (3) being received, which are sent by these mobile devices (3) via the contactless interface, and by means of this processing module (17) certain of the said digital data received being transmitted via the contactless interface, based on the received selection commands, and
**in that** a user initiates an order through actuation of certain operating elements (34) of one of said mobile device (3), in order to transmit data by means of short messages from this one of said mobile devices (3) over a mobile radio network (4) to a service centre (41) on the basis of certain of said digital data received.

17. Ordering method according to the preceding claim, **characterised in that** at least certain of the said digital data received are filtered in said display device (1) on the basis of addressing information.

18. Ordering method according to one of the claims 16 to 17, **characterised in that** at least certain of the said digital data received comprise an identification of said service centre (41) as well as a product or service identification.

19. Ordering method according to one of the claims 16 to 18, **characterised in that** said contactless interface is an infrared interface and said selection commands are transmitted to said display device (1) by means of an infrared transmitter (31) integrated into the housing of said mobile device (3).

20. Ordering method according to one of the claims 16 to 18, **characterised in that** said contactless interface is an inductive interface and said selection commands are transmitted to said display device (1) by means of a coil (32) integrated into said mobile device (3).

21. Ordering method according to one of the claims 16 to 18, **characterised in that** said contactless interface is an inductive interface and said selection commands are transmitted to said display device (1) by means of a coil (36) integrated into a chipcard (35) removably connected to said mobile device (3).

22. Ordering method according to one of the claims 16 to 21, **characterised in that** at least certain of the data transmitted by said mobile device (3) via said contactless interface to said display device (1) can be transmitted to a service centre (51) by said display device (1) over a mobile radio network (5) or a fixed network (5).

23. Ordering method according to one of the claims 16 to 22, **characterised in that** at least certain of the said digital data transmitted to said mobile device (3) are filtered in said mobile device (3) on the basis of user profiles.

24. Ordering method according to the preceding claim, **characterised in that** said user profiles are stored on a chipcard (35) removably connected to said mobile device (3).

25. Ordering method according to one of the claims 16 to 24, **characterised in that** said digital data transmitted to said mobile device (3) and received by said mobile device (3) can be displayed on a display unit (33) of said mobile device (3), and can be browsed through and selected by said user by means of said operating elements (34).

26. Ordering method according to one of the claims 16 to 25, **characterised in that** said digital data transmitted to said mobile device (3) and received by said mobile device (3) can be further processed, through predefined software functions, in a chipcard (35) removably connected to said mobile device (3).

27. Ordering method according to one of the claims 16 to 26, **characterised in that** said data receiving module (13, 13') is a radio receiver (13, 13') or a television receiver (13, 13') for receiving program-accompanying digital data, a mobile radio module (13, 13') for receiving and transmitting digital data over a mobile radio network, a communications module (13, 13') for receiving and transmitting digital data over a fixed network, or a reader (13, 13') for reading digital data from a data carrier.

## Revendications

1. Dispositif d'affichage (1) comprenant un panneau d'affichage (12) sur lequel des informations peuvent être affichées ainsi qu'un module (13, 13') récepteur de données, destiné à recevoir des données numériques pouvant être affichées sur le panneau d'affichage (12), ce panneau d'affichage (12) étant dimensionné de telle façon que les utilisateurs puissent encore lire à plusieurs mètres de distance les informations reçues par le module (13, 13') récepteur de données et affichées sur le panneau d'affichage (12), **caractérisé**
**en ce que** le dispositif d'affichage (1) comprend en outre au moins une interface sans contact par l'intermédiaire de laquelle au moins certaines des données numériques reçues peuvent être transmises à un ou plusieurs appareils mobiles (3) personnels extérieurs portables non reliés au dispositif d'affichage (1) et se trouvant dans sa zone d'émission, et
**en ce que** le dispositif d'affichage (1) comprend un module de traitement (17) conçu de manière à émettre périodiquement, par l'intermédiaire de l'interface sans contact, au moins certaines des données numériques reçues ou bien, ou les deux à la fois, conçu de manière à recevoir, par l'intermédiaire de l'interface sans contact, des ordres de sélection émis par les appareils mobiles (3) et, conformément aux ordres de sélection reçus, à émettre, par l'intermédiaire de l'interface sans contact, certaines des données numériques reçues.

2. Dispositif d'affichage (1) selon la revendication précédente, **caractérisé en ce que** le module (13, 13') récepteur de données est un récepteur radiophonique (13, 13') destiné à la réception de données numériques accompagnant les programmes.

3. Dispositif d'affichage (1) selon la revendication 1, **caractérisé en ce que** le module (13, 13') récepteur de données est un récepteur de télévision (13, 13') destiné à la réception de données numériques accompagnant les programmes.

4. Dispositif d'affichage (1) selon la revendication 1, **caractérisé en ce que** le module (13, 13') récepteur de données est un module radio mobile (13, 13') destiné à la réception et à la transmission de données numériques au moyen d'un réseau radio mobile.

5. Dispositif d'affichage (1) selon la revendication 1, **caractérisé en ce que** le module (13, 13') récepteur de données est un module de communication (13, 13') destiné à la réception et à la transmission de données numériques au moyen d'un réseau fixe.

6. Dispositif d'affichage (1) selon la revendication 1, **caractérisé en ce que** le module (13, 13') récepteur de données est un lecteur (13, 13') destiné à la lecture de données numériques sur un support de données.

7. Dispositif d'affichage (1) selon l'une des revendications 1 à 5, **caractérisé en ce qu'**il comprend des moyens de filtrage grâce auxquels il ne reçoit que celles des données numériques qui lui sont adressées.

8. Dispositif d'affichage (1) selon l'une des revendications précédentes, **caractérisé en ce que** l'appareil mobile (3) auquel les certaines données numériques au moins qui sont reçues peuvent êtres transmises est un téléphone mobile (3).

9. Dispositif d'affichage (1) selon l'une des revendications précédentes, **caractérisé en ce que** l'interface sans contact comprend au moins une bobine (15) au moyen de laquelle les certaines données numériques au moins qui sont reçues peuvent êtres transmises sous la forme d'ondes électromagnétiques à au moins certains des appareils mobiles (3).

10. Dispositif d'affichage (1) selon la revendication précédente, **caractérisé en ce que** la bobine (15) permet aussi de recevoir des données de l'appareil mobile (3).

11. Dispositif d'affichage (1) selon l'une des revendications précédentes, **caractérisé en ce que** l'interface sans contact comprend un émetteur à infrarouge (16) au moyen duquel les certaines données numériques au moins qui sont reçues peuvent êtres transmises sous la forme de rayons infrarouges à au moins certains des appareils mobiles (3).

12. Dispositif d'affichage (1) selon la revendication précédente, **caractérisé en ce que** l'interface sans contact comprend en outre un récepteur à infrarouge (16) au moyen duquel l'appareil mobile (3) peut recevoir des données.

13. Dispositif d'affichage (1) selon l'une des revendications précédentes, **caractérisé en ce que** le panneau d'affichage (12) et le module (13) récepteur de données sont intégrés dans un boîtier commun (11) du dispositif d'affichage (1).

14. Dispositif d'affichage (1) selon l'une des revendications 1 à 12, **caractérisé en ce que** le panneau d'affichage (12) et le module (13') récepteur de données sont intégrés dans des boîtiers séparés et reliés par une interface (14).

15. Dispositif d'affichage (1) selon l'une des revendications précédentes, **caractérisé en ce qu'**il comprend un haut-parleur (20) et des amplificateurs (19) servant à reproduire acoustiquement les programmes audio reçus par le module (13, 13') récepteur de données.

16. Procédé de passation de commandes dans lequel des données numériques sont reçues par un dispositif d'affichage (1) possédant un module (13, 13') récepteur de données, au moins certaines des données numériques reçues étant affichées sur un panneau d'affichage (12) du dispositif d'affichage (1), panneau d'affichage (12) qui est dimensionné de telle manière que les utilisateurs puissent encore lire à plusieurs mètres de distance les informations reçues par le module (13, 13') récepteur de données et affichées sur le panneau d'affichage (12), **caractérisé en ce**
**qu'**au moins certaines des données numériques reçues sont transmises, en passant par une interface sans contact, à un ou plusieurs appareils mobiles (3) extérieurs non reliés au dispositif d'affichage (1), se trouvant dans la zone d'émission du dispositif d'affichage (1), un module de traitement (17) du dispositif d'affichage (1) émettant périodiquement, par l'intermédiaire de l'interface sans contact, au moins certaines des données numériques reçues ou, ou bien les deux à la fois, ce module de traitement (17) recevant des ordres de sélection d'appareils mobiles (3), ordres émis par ces appareils mobiles (3) par l'intermédiaire de l'interface sans contact, et ce module de traitement (17) émettant, conformément aux ordres de sélection reçus, certaines des données numériques reçues par l'intermédiaire de l'interface sans contact, et
en ce qu'un utilisateur lance une commande en actionnant certains organes de manoeuvre (34) de l'un des appareils mobiles (3) pour envoyer des données en fonction de certaines des données numériques reçues, au moyen de messages courts, à partir de cet appareil mobile (3) parmi les autres, par l'intermédiaire d'un réseau radio mobile (4), à un centre de prestation de services (41).

17. Procédé de passation de commandes selon la revendication précédente, **caractérisé en ce qu'**au moins certaines des données numériques reçues sont filtrées dans le dispositif d'affichage (1) sur la base d'informations d'adressage.

18. Procédé de passation de commandes selon la revendication 16 ou 17, **caractérisé en ce qu'**au moins certaines des données numériques reçues comprennent une identification du centre de prestation de services (41) et une identification des produits ou des services.

19. Procédé de passation de commandes selon l'une des revendications 16 à 18, **caractérisé en ce que** l'interface sans contact est une interface à infrarouge et que les ordres de sélection sont transmis au dispositif d'affichage (1) au moyen d'un émetteur à infrarouge (31) intégré dans le boîtier de l'appareil mobile (3).

20. Procédé de passation de commandes selon l'une des revendications 16 à 18, **caractérisé en ce que** l'interface sans contact est une interface inductive et que les ordres de sélection sont transmis au dispositif d'affichage (1) au moyen d'une bobine (32) intégrée à l'appareil mobile (3).

21. Procédé de passation de commandes selon l'une des revendications 16 à 18, **caractérisé en ce que** l'interface sans contact est une interface inductive et que les ordres de sélection sont transmis au dispositif d'affichage (1) au moyen d'une bobine (36) intégrée à une carte à puce (35) qui est reliée de manière amovible à l'appareil mobile (3).

22. Procédé de passation de commandes selon l'une des revendications 16 à 21, **caractérisé en ce qu'**au moins certaines des données transmises par l'appareil mobile (3) au dispositif d'affichage (1) par l'intermédiaire de l'interface sans contact peuvent être transmises par le dispositif d'affichage (1) à une centrale de service (51) par l'intermédiaire d'un réseau radio mobile (5) ou d'un réseau fixe (5).

23. Procédé de passation de commandes selon l'une des revendications 16 à 22, **caractérisé en ce qu'**au moins certaines des données numériques transmises à l'appareil mobile (3) sont filtrées, dans cet appareil mobile (3), sur la base de profils d'utilisateurs.

24. Procédé de passation de commandes selon la revendication précédente, **caractérisé en ce que** les profils d'utilisateurs sont mis en mémoire sur une carte à puce (35) reliée à l'appareil mobile (3) de manière amovible.

25. Procédé de passation de commandes selon l'une des revendications 16 à 24, **caractérisé en ce que** les données numériques reçues transmises à l'appareil mobile (3) et reçues par celui-ci peuvent être affichées sur une unité d'affichage (33) de cet appareil mobile (3) et feuilletées et sélectionnées par l'utilisateur au moyen des organes de manoeuvre (34).

26. Procédé de passation de commandes selon l'une des revendications 16 à 25, **caractérisé en ce que** les données numériques transmises à l'appareil mobile (3) et reçues par celui-ci peuvent être traitées, dans une carte à puce (35) reliée à l'appareil mobile (3) de manière amovible, par des fonctions de logiciel prédéterminées.

27. Procédé de passation de commandes selon l'une des revendications 16 à 26, **caractérisé en ce que** le module (13, 13') récepteur de données est un récepteur radiophonique ou de télévision (13, 13') servant à recevoir des données numériques d'accompagnement de programmes, un module de radio mobile (13, 13') destiné à recevoir et à transmettre des données numériques par l'intermédiaire d'un réseau radio mobile, un module de communication (13, 13') destiné à recevoir et à transmettre des données numériques par l'intermédiaire d'un réseau fixe, ou un lecteur (13, 13') servant à lire des données numériques sur un support de données.
